# EUROPÄISCHE PATENTSCHRIFT

(11) **EP 3 214 399 B1**
(45) Veröffentlichungstag und Bekanntmachung des Hinweises auf die Patenterteilung: **04.07.2018**
(21) Anmeldenummer: 16195935.8
(22) Anmeldetag: 27.10.2016
(51) Int. Cl.: F41A 9/21, F41A 9/06, B63G 3/00, B66B 9/00

(54) **MUNITIONSAUFZUG FÜR SCHIFFE**
AMMUNITION ELEVAOTR FOR SHIPS
ASCENSEUR DE MUNITIONS POUR NAVIRES

(30) Priorität: 29.10.2015 DE 102015014002
(43) Veröffentlichungstag der Anmeldung: 06.09.2017
(73) Patentinhaber: Metallverarbeitungsgesellschaft Schubert & Co. (GmbH & Co. KG), 22525 Hamburg (DE)
(72) Erfinder: GÖTZ, Armin, 22525 Hamburg (DE)
(74) Vertreter: TBK

(56) Entgegenhaltungen:
- EP-A1- 1 151 955
- DE-C- 215 283
- DE-C- 242 977
- FR-A- 660 891
- KR-A- 20120 119 499

## Beschreibung

Die Erfindung betrifft einen Munitionsaufzug für Schiffe gemäß dem Oberbegriff des Anspruchs 1, dessen Merkmale z.B. aus der Druckschrift FR 660 891 A bekannt sind.

Aus dem Stand der Technik sind Munitionsaufzüge für Schiffe bekannt. Diese dienen zur Zufuhr von Geschoßen und Kartuschen zu einem Geschütz. Als Beispiel für einen derartigen Munitionsaufzug sei die Druckschrift EP 2 392 887 genannt.

Aufgrund von neuen Geschützentwicklungen besteht Bedarf, nahezu zeitgleich verschiedene Munitionsarten zu einem Geschütz zuzuführen, um unterschiedlichen Einsatzzwecken gerecht werden zu können. Die einzelnen Munitionsarten sind dabei in Magazinen direkt an dem Geschütz untergebracht, von wo aus das einzelne Geschoß in das Rohr zugeführt wird. Nach dem Abfeuern des Geschoßes wird dieses dann in dem Magazin ergänzt. Dieser Nachschub an Geschoßen erfolgt von Transportbehältern (z.B. Paletten) aus, die von einem Laderaum aus über einen Aufzug zu den Magazinen zugeführt werden. Entleerte Transportbehälter müssen ebenfalls wieder entfernt werden.

Die Druckschrift EP 1 151 955 A1 offenbart einen Aufzug ohne Maschinenraum, in dem ein elastisches Element zwischen einer Führungsschiene für einen Fahrkorb und einem Träger vorgesehen ist.

Es besteht daher Bedarf an einem Aufzug, der in der Lage ist, Transportbehälter mit Munition zu einem Magazin eines Schiffsgeschützes zuzuführen. Aufgrund des vorgesehenen Einsatzes des Schiffes müssen empfindliche Komponenten des Aufzugs schocksicher ausgeführt sein.

Die Erfindung hat die Aufgabe, einen derartigen Aufzug bereitzustellen.

Die Aufgabe der Erfindung wird durch einen Aufzug nach Anspruch 1 gelöst. Vorteilhafte Ausführungsformen werden gemäß den abhängigen Ansprüchen ausgeführt.

Ein erfindungsgemäßer Munitionsaufzug für Schiffe weist einen Hubmast, eine Antriebseinheit und einen an dem Hubmast beweglich angebrachten und durch die Antriebseinheit angetriebenen Fahrkorb mit einem Fahrkorbboden auf. Der Fahrkorb ist von mehreren Seiten zugänglich, damit er von mehr als einer Seite beladen werden kann. Die Antriebseinheit ist über elastische Elemente an dem Hubmast gelagert.

Der Fahrkorb ist an mindestens einer über die Antriebseinheit geführten, umlaufenden Kette aufgehängt. Dabei ist der Fahrkorb bevorzugt oberhalb und unterhalb des Fahrkorbbodens an der Kette befestigt.

Durch eine derartige Anordnung, kann eine Zwangsführung des Fahrkorbs erreicht werden. Insbesondere im Fall eines Schocks aber auch bei rauem Seegang kann damit eine vertikale Bewegung des Fahrkorbs unterbunden werden.
Besonders vorteilhaft ist der Fahrkorb von drei Seiten zugänglich, weshalb er innerhalb des Schiffsrumpfes unabhängig von baulichen Gegebenheiten jederzeit beladen oder entladen werden kann. Es sei auch darauf hingewiesen, dass der Fahrkorb über unterschiedliche Seiten be- und entladen werden kann.

Da die Antriebseinheit über elastische Elemente an dem Hubmast gelagert ist, können im Fall eines Schocks (z.B. aufgrund einer Explosion durch Beschuss) auftretende Kräfte durch die elastischen Elemente aufgenommen werden, ohne dass die Antriebseinheit und damit der mit der Antriebseinheit verbundene Fahrkorb samt Verbindungselementen wie Ketten, Seilen usw. diesen übermäßig großen Kräften ausgesetzt sind. Der Aufzug muss nämlich auch nach einer Schockeinwirkung noch funktionstüchtig sein.

Der Fahrkorb kann an mehreren Seiten mit Rollentischen versehen sein, die bevorzugt ausklappbar ausgebildet sind. Außerdem können die Rollentische mit Stützfüßen versehen sein. Mindestens einer der Rollentische kann mit Führungsleisten, Kippsicherungen oder beidem für einen Transportbehälter versehen sein.

Durch die vorteilhafte Ausgestaltung des Fahrkorbs mit Rollentischen, können Transportbehältern mit Munition einfach von einem Lagerraum über die Rollentische auf den Boden des Fahrkorbs verschoben werden. Durch die Führungsleisten und Kippsicherungen ist auch bei Seegang sichergestellt, dass ein Kippen oder Verrutschen der Transportbehälter nicht vorkommt.

Die Anzahl der Ketten kann zwei betragen. Die Ketten können oberhalb des Fahrkorbs über eine Kettenwippe mit dem Fahrkorb verbunden sein. Bei Bruch einer Kette kann sich die Kettenwippe schräg stellen, um einen Schalter zu betätigen.

Durch die voranstehend beschriebene Anordnung kann im Fall eines Kettenbruchs über den Schalter eine sofortige Abschaltung des Aufzugs und damit eine Vermeidung weiterer Schäden vorgenommen werden.

Die mindestens eine Kette kann unterhalb des Fahrkorbbodens (2B) über ein vorgespanntes elastisches Element mit dem Fahrkorbrahmen verbunden sein.

Der Boden des Fahrkorbs kann mit Kugelrollen und/oder einem aus dem Fahrkorbboden ausfahrbaren und in dem Fahrkorbboden versenkbaren Arretierstift versehen sein.

Aufgrund dieser Struktur kann ein Transportbehälter in einfacher Weise in den Fahrkorb geladen und während des Transports per Aufzug gesichert werden.

Der Fahrkorb kann über eine Mehrzahl in mindestens einer an dem Hubmast vorgesehenen Führungsschiene laufenden, voneinander beabstandeten Führungsrolleneinheiten geführt sein. Dabei ist es insbesondere möglich, den Fahrkorb an einem oberen Ende des Hubmasts so weit auszufahren, dass eine der Führungsrolleneinheiten außerhalb und oberhalb der Führungsschiene liegt. Bei einem Absenken des Fahrkorbs wird die Führungsrolle wieder von der Führungsschiene aufgenommen.

Vorteilhaft kann durch die beschriebene Struktur der Fahrkorbboden bis zum obersten Deck (Oberdeck) des Schiffs geführt werden, obwohl der Hubmast bereits unterhalb des obersten Decks endet. Dabei kann der Fahrkorb einfach über das Oberdeck beladen (oder entladen) und dann in beladenem Zustand wieder abgesenkt werden. Eine sichere Führung des Fahrkorbs ist sichergestellt, da jederzeit mindestens zwei Führungsrollen in den Führungsschienen verbleiben, während eine Führungsrolle über das Oberdeck hinausgeführt wird.

Die Antriebseinheit des erfindungsgemäßen Munitionsaufzugs kann einen Motor und ein von dem Motor angetriebenes Antriebsrad aufweisen, über das die mindestens eine Kette geführt ist. Das Antriebsrad ist bevorzugt über eine Rutschnabe einer Rutschkupplung auf einer Abtriebsachse des Motors gelagert ist.

Aufgrund der Rutschnabe können übermäßig hohe Belastungen vor allem im Fall eines Schocks ausgeschlossen werden. Vorteilhaft ist die Rutschnabe so eingestellt, dass betriebsmäßig die doppelte maximale Last im Aufzug nicht zu einem Durchrutschen führen kann.

Das Antriebsrad kann als Antriebsdoppelkettenrad ausgebildet sein, das als ein Teil gefertigt und mit Stirnscheiben versehen ist, die zwischen Reibbelägen der Rutschkupplung eingespannt sind.

Durch diese Ausgestaltung ist die Kettenführung bei zwei Tragketten sichergestellt.

In einem erfindungsgemäßen Munitionsaufzug kann ein Wegaufnehmer direkt an dem Hubmast angebracht sein. Der Wegaufnehmer kann eine Positionsänderung der Kette relativ zu dem Hubmast erfassen.

Da die Antriebseinheit elastisch gelagert ist, ist es zur exakten Positionsregelung des Fahrkorbs vorteilhaft, die Ist-Position des Fahrkorbes fehlerfrei zu erfassen, da es aufgrund der schocksicheren Lagerung der Antriebseinheit insbesondere bei Beladung des Fahrkorbs zu Positionsänderungen des Fahrkorbs kommt. Die fehlerfreie Positionserfassung ist aufgrund der voranstehend beschriebenen Ausgestaltung sichergestellt.

In einem erfindungsgemäßen Munitionsaufzug kann eine Fangvorrichtung in Form eines umlaufenden Seils vorgesehen sein, das mittels einer Bremseinrichtung gebremst wird, wenn eine erfasste Geschwindigkeit des Fahrkorbs einen vorbestimmten Grenzwert überschreitet.

Dementsprechend kann ein Absturz des Fahrkorbs verhindert werden.

In einem erfindungsgemäßen Munitionsaufzug können an einer tiefsten Position des Hubmastes ein oder mehrere Puffer vorgesehen sein, gegen die der Fahrkorb in Anlage geraten kann. Die Puffer können bevorzugt elastisch ausgeführt sein.

Dadurch kann der Fahrkorb eine Ruheposition einnehmen, in der die Antriebseinheit, die Aufhängungen und ähnliche Elemente entlastet sind.

Es sei darauf hingewiesen, dass sich örtliche Bezüge wie z.B. "oben", "unten" usw. auf einen in einem Schiff eingebauten Munitionsaufzug mit vertikal auf den Decks errichtetem Hubmast beziehen. Dies gilt für die gesamte Beschreibung wie auch die anhängenden Ansprüche.

Durch die Erfindung wird ein Munitionsaufzug bereitgestellt, der folgende Vorteile bietet:
Der Munitionsaufzug liegt in schockfester Ausführung nach den Vorschriften der Bundesmarine vor. Er dient zur Förderung von Standartmunition, Treibladungen und Vulcano-Containern.

Der Fahrkorb ist von drei Seiten zugänglich, wodurch er trotz der örtlichen Gegebenheiten an Bord in jedem Deck be- und entladen werden kann. Zum Beladen und Entladen kann er auch das freie Oberdeck (B-Deck) erreichen.

Beispielsweise kann der Fahrkorb aufgrund der Gegebenheiten eines Schiffes, in das der Munitionsaufzug eingebaut wird, für die Beladung unter Deck, im Z-Deck und P-Deck nur in Richtung Vorschiff zugänglich sein, während er am Oberdeck und auf dem freien B-Deck aufgrund der Anordnung des Geschützes in Richtung Vorschiff nur steuerbordseitig und backbordseitig für eine Beladung zugänglich ist.

Die Beladung des Fahrkorbes mit den unterschiedlichen Munitionen kann mit geeigneten Transportbehältern erfolgen. Unter Deck kann die Munition "seegangssicher" transportiert werden. Dies bedeutet, dass ein Kippen oder eine unkontrollierte Bewegung der Transportbehälter auch bei grobem Seegang zuverlässig ausgeschlossen werden kann. An Oberdeck können die bestückten Transportbehälter mittels Kran auf zusätzliche Zwischenablagen abgesetzt und sowohl richtungs- als auch kippsicher in den Fahrkorb verbracht werden, ohne dass es notwendig ist, die Behälter anzuheben. Im Fahrkorb sind die Behälter auch bei Seegang verriegelt und gesichert.

Der Fahrkorb hat eine Parkposition auf Puffern in der untersten Station.

Eine automatische Fangeinrichtung zur Verhinderung eines Fahrkorbabsturzes bei z.B. Kettenbruch, ist vorhanden.

An einem dem Boden entgegengesetzten Ende des Fahrkorbes können Auflaufkurven ausgebildet sein, die eine Aufnahme und Zwangsführung für eine Führungsrolle eines Schachtdeckels aufweisen.

Dadurch kann bei einem Hochfahren des Munitionsaufzugs aus dem Schacht vorteilhaft der Schachtdeckel geöffnet werden. Ein Herunterfallen des Deckels und damit eine mögliche Verletzungsgefahr sind durch die Zwangsführung ausgeschlossen.

Die Konstruktion der gesamten Anlage ist schockfest ausgeführt. Die Bauteile, die den vorgegebenen Schockbelastungen nicht standhalten, sind mit entsprechenden Schock reduzierenden Maßnahmen (z.B. Dämpfern) versehen und befestigt.

Weitere Vorteile der Erfindung sind aus der folgenden Beschreibung einer derzeit bevorzugten Ausführungsform in Zusammenhang mit den anhängenden Figuren ersichtlich. In den Figuren zeigt:
Fig. 1 eine Seitenansicht eines erfindungsgemäßen Munitionsaufzugs;
Fig. 2 eine Rückansicht der von dem Fahrkorb abgewandten Seite des erfindungsgemäßen Munitionsaufzugs;
Fig. 4 eine Draufsicht eines Fahrkorbs des erfindungsgemäßen Munitionsaufzugs;

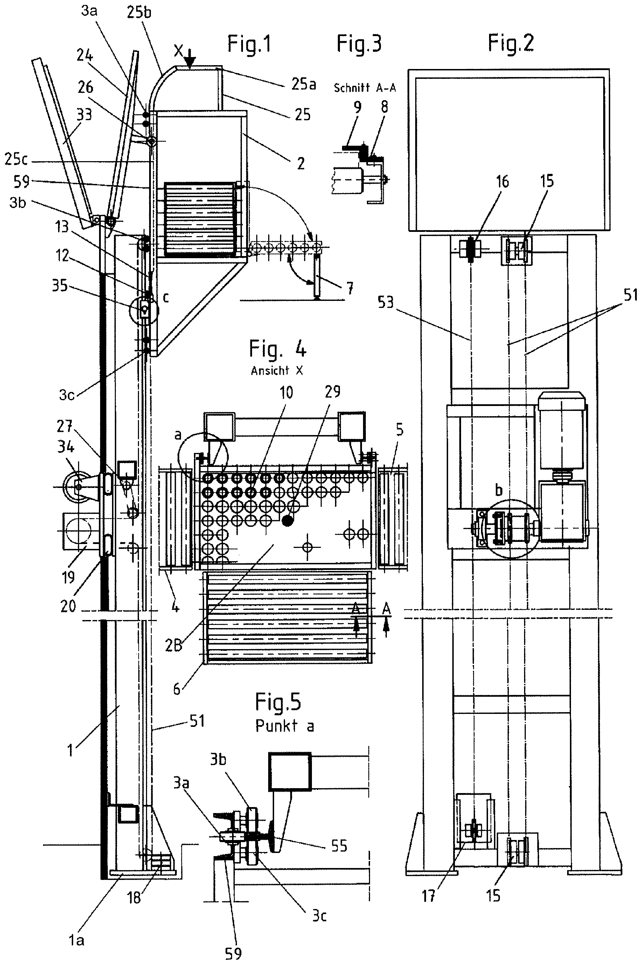

Fig. 3 einen Schnitt entlang einer Linie A-A in Fig. 4;
Fig. 5 eine Vergrößerung eines in Fig. 4 mit "a" bezeichneten Ausschnitts;

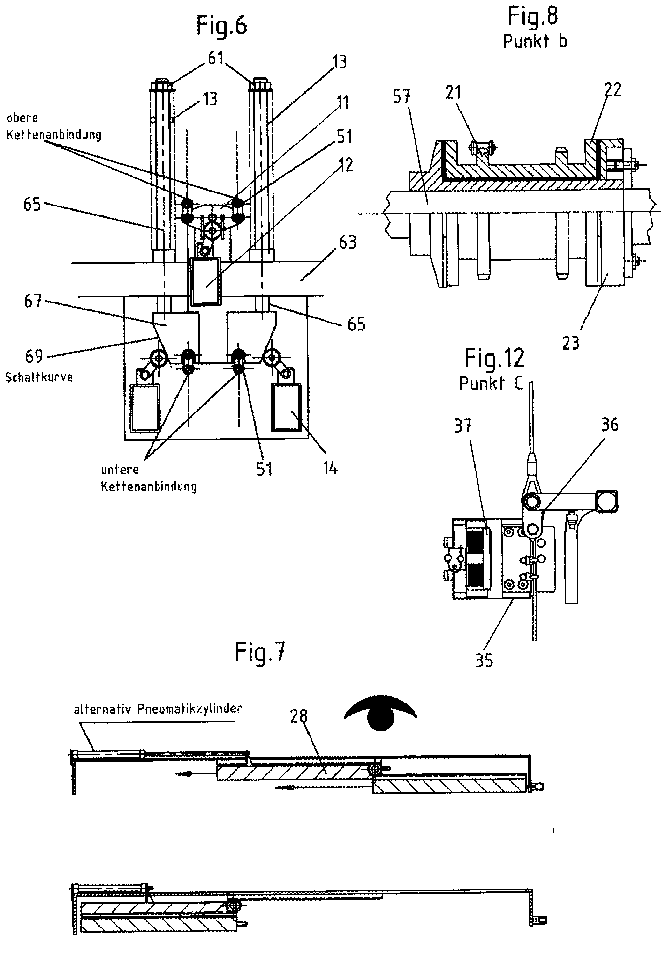

Fig. 6 eine Ansicht der Aufhängung des Fahrkorbs des erfindungsgemäßen Munitionsaufzugs;
Fig. 7 eine Ansicht der zweiteiligen Schiebetür in geöffnetem und geschlossenem Zustand
Fig. 8 eine Vergrößerung eines mit "b" bezeichneten Ausschnitts aus Fig. 2;

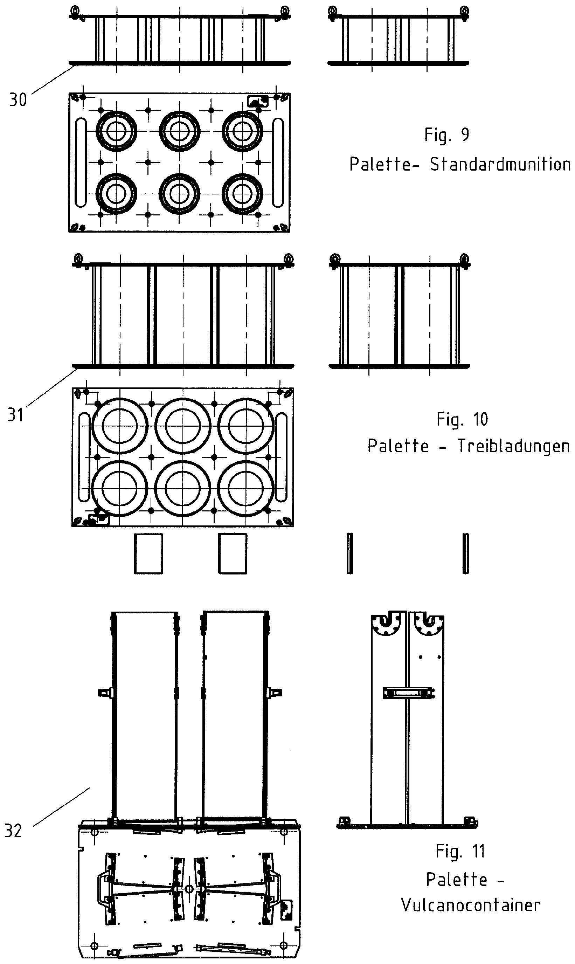

Figs. 9 bis 11 sind jeweils eine Vorder-, eine Seitenansicht und eine Draufsicht von verschiedenen Transportbehältern.
Fig. 12 eine Vergrößerung eines mit "c" bezeichneten Ausschnitts aus Fig. 1

Ein Munitionsaufzug gemäß der Erfindung besteht aus einem an einer Schachtwand eines Schiffes angebrachten Hubmast 1 mit zwei Führungsschienen 55, an denen ein Fahrkorb 2 einseitig an zwei Ketten hängend geführt ist. Der Hubmast 1 steht auf einer Fundamentplatte (in Figs. 1 und 2 unten) im Schachtsumpf und führt durch alle Decks bis in den Schachtkopf auf dem freien Deck, wo er ca. 50mm unterhalb der Sülloberkante des Schachtkopfes endet.

Der Hubmast 1 ist in allen Decks zum Ausgleich schiffbaulicher Toleranzen mit verschiebbaren Maß ausgleichenden Winkeln an die Schachtwand geschraubt.

Durch die schiffbaulichen Gegebenheiten ist der im Schacht vorhandene Sumpf (Überfahrweg/Sicherheitsraum von der untersten Stopp-Position bis zum Schachtboden) nur sehr flach ausgeführt, wodurch sowohl der Überfahrweg als auch eine benötigte Verlängerung der Fahrkorbführungen unterhalb des Fahrkorbes zum Herausfahren auf das freie Deck begrenzt sind.

Den Abschluss des Aufzugsschachtes bildet ein werftseitig angeordneter klappbarer wasserdichter Schachtdeckel 33 mit einem darunter angeordneten, zusätzlichen Sicherheitsdeckel 24. Der wasserdichte Schachtdeckel 33 muss immer erst von Hand vollständig geöffnet und verriegelt werden, bevor der Fahrkorb 2 in das freie Deck geholt werden kann. Der Öffnungswinkel des Schachtdeckels ist größer als 90°.

Wird der Fahrkorb 2 an das Oberdeck geholt, geschieht dies mit langsamer Geschwindigkeit. Dabei wird der Sicherheitsdeckel 24 mit Führungsrollen 26 zwangsgeführt über oben am Fahrkorb befestigte Auflaufkurven 25a, 25b, 25c geöffnet bzw. geschlossen. Die Deckel 24, 33 werden jeweils in ihrer offenen bzw. geschlossenen Position von einer Steuerung des Munitionsaufzugs überwacht.

Die Auflaufkurven 25 sind aus einem horizontal angeordneten flachen Profil (Flacheisen) 25a und zwei einander gegenüberliegenden, gekrümmten U-förmigen Profil 25b und zwei an die gekrümmten U-förmigen Profile 25b anschließenden vertikalen U-förmigen Profil 25c aufgebaut. Eine offene Seite der U-förmigen Profile 25b und 25c ist zur Mitte des Fahrkorbs 2 gerichtet. Die Führungsrollen 26 sind an Schenkeln einer T-förmigen Halterung gelagert.

Das Flacheisen 25a dient als Aufnahme für die Führungsrollen 26 des Sicherheitsdeckels (Schachtdeckel) 24. Da die offene Seite der U-förmigen Profile 25b, 25c zu der Mitte des Fahrkorbs 2 gerichtet sind, ist ein Durchführen des Schafts der T-förmigen Halterung entlang der oberen bzw. äußeren Wand des U-förmigen Profils möglich Allerdings ist ein Lösen der Führungsrollen 26 von dem jeweiligen U-förmigen Profil 25b, 25c verhindert. Somit kommt es zu einer Zwangsführung der Führungsrollen 26.

Im Zuge des Hochfahrens des Fahrkorbs gerät nämlich die Führungsrolle 26 gegen das Flacheisen 25a in Anlage. Dabei überträgt sich die Druckkraft des Fahrkorbes 2 von unten auf den Sicherheitsdeckel 24, der sich dabei öffnet. Im Zuge des Öffnens des Sicherheitsdeckels 24 rollt die Führungsrolle entlang des Flacheisens 25a und entlang des gekrümmten U-förmigen Profils 25b zu dem vertikalen U-förmigen Profils 25c zu der in Fig. 1 dargestellten Position, die den vollständig geöffneten Schachtdeckel 24 zeigt. Ein Lösen der Führungsrolle 26 von den U-förmigen Profilen ist durch die Wand jedes U-förmigen Profils 25b, 25c verhindert, die an der dem Fahrkorb 2 abgewandten Seite positioniert ist.

Bevorzugt sind einander jeweils zwei gegenüberliegende U-förmige Profile 25b, 25b und 25c, 25c vorgesehen. Es sei aber darauf hingewiesen, dass die Zwangsführung auch mit lediglich einem gekrümmten und einem vertikal liegenden U-förmigen Profil möglich ist.

An dem Fahrkorb sind sechs Führungsrolleneinheiten 3 (drei Führungsrolleneinheiten 3 pro Seite) derart in einem Abstandsverhältnis an einem Rahmenteil 59 des Fahrkorbs 2 angeordnet, dass ein Herausfahren der obersten zwei Führungsrolleneinheiten 3 aus den Führungsschienen 55 möglich ist. Dieser Zustand ist aus Fig. 1 ersichtlich. Die unteren vier Führungsrolleneinheiten 3b, 3c verlassen die Führungsschienen 55 nicht und stützen den Fahrkorb 2 jederzeit gegen Kippen ab. Die Führungsrolleneinheiten 3 sind so ausgeführt, dass sich die jeweiligen Rollen 3a, 3b, 3c an drei Seiten der jeweiligen Führungsschiene 55 abstützen, nämlich an der in Richtung des Vorschiffs angeordneten Stirnseite sowie an der Bb und an der Stb-Seite. Somit nehmen die jeweiligen Rollen 3a, 3b, 3c die seitlichen Kippmomente in beiden horizontalen Richtungen parallel und quer zur Längsachse des Schiffes auf. Die Anordnung der Rollen 3a, 3b, 3c zu der Führungsschiene 55 ist im Detail aus Fig. 5 ersichtlich, die die hintere, die vordere und die stirnseitige Führungsschienenfläche der Führungsschiene 55 im Schnitt zeigt. Die Rollen 3a, 3b, 3c sind bevorzugt mittels Wälzlager (Kugellager) gelagert.

Durch die einseitig hängende Führung des Fahrkorbes 2 am Hubmast (auch als Aufzugmast bezeichnet) 1 Richtung Achterschiff sind die übrigen drei Seiten des Fahrkorbs 2 zugänglich, wodurch das Beladen und Entladen von drei Seiten (von Backbord, von Steuerbord und von dem Vorschiff aus) in den unteren Decks und an Oberdeck realisiert werden kann. Durch die Anordnung des Geschützes und den daraus resultierenden Platzverhältnissen, ist das Beladen und Entladen auf dem freien Deck (Oberdeck) nur von zwei Seiten, Steuerbord (Stb) und Backbord (Bb) möglich.

Für das geführte und kippsichere Beladen des Fahrkorbs 2, ist an drei Seiten jeweils ein um 90 Grad ausklappbarer Rollentisch 4, 5, 6 vorgesehen. Die Rollentische 4, 5, 6 sind mit höhenverstellbaren Stützfüßen 7 ausgestattet, die im ausgeklappten Zustand der Rollentische 4, 5, 6 in den jeweiligen Stationen ausgeschwenkt werden können. Die Stützfüße 7 sichern die Standfestigkeit der Rollentische 4, 5, 6 und nehmen Belastungsmomente auf. Für die Beladung und Entladung des Fahrkorbes mit der gewünschten Munition sind als Transportbehälter individuell konstruierte Transportpaletten 30, 31, 32 vorgesehen, in denen die Munition stehend und gegen Kippen gesichert transportiert werden kann. Die Transportpaletten 30, 31, 32 lassen sich auf den Rollentischen 4, 5, 6 leicht ohne weiteres Anheben verschieben. Ansichten der Transportpaletten 30, 31, 32 sind aus Figs. 9, 10 und 11 ersichtlich.

Als Zwischenlagerung der Transportpaletten 30, 31, 32 an Oberdeck dienen aufstellbare Rollentische aus Aluminium mit Klappfüßen auf Bb und Stb Seite, die in Decksbuchsen gegen ein Verrutschen gesichert so positioniert werden können, dass die Stirnseiten der Rollentische 4, 5, nach dem Ausklappen des entsprechenden Rollentisches 4, 5, von der Bb- oder Stb-Seite des Fahrkorbs 2 bündig und auf einem Niveau abschließen. Dadurch ist die geführte nahtlose und kippsichere Übergabe der Paletten von Bb und Stb-Seite in den Fahrkorb durch leichtes Verschieben gewährleistet.

Die Rollentische 4, 5, 6 sind mit Führungsleisten 8 sowie Kippsicherungen 9 ausgestattet, wodurch das Be- und Entladen des Fahrkorbs mit den Paletten 30, 31, 32 auch bei rauem Seegang sicher durchführbar ist, ohne dass es zu Blockaden des Fahrkorbs 2 kommt.

Der Fahrkorbboden 2B ist mit Kugelrollen 10 versehen, damit die Paletten 30, 31, 32 zur Be- und Entladung leicht nach Bb und Stb bzw. Vorschiff bewegt werden können. Die Paletten 30, 31, 32 werden im Fahrkorb 2 über eine Bohrung in der Grundplatte der Paletten und durch einen federbelasteten und elektrisch betätigten Riegelbolzen 29 (ein erfindungsgemäßer Arretierstift) gegen Verrutschen gesichert.

Alle Funktionen der Rollentische 4, 5, 6 sind mechanisch und elektrisch gesichert, d.h. die Stellung der klappbaren Rollentische 4, 5, 6 einschließlich der klappbaren Stützfüße 7 wird überwacht. Bei ausgeklapptem Tisch 4, 5, 6 oder nicht eingeklappten Füßen 7 lässt sich der Fahrkorb 2 nicht bewegen.

Eine Antriebseinheit 19 ist auf einer Antriebskonsole an der Rückseite des Aufzugsgerüstes im H-Deck (eines der unteren Decks) platziert. Die Befestigung der gesamten Antriebseinheit 19 am Hubmast 1 erfolgt über Schockdämpfer. Als Schockdämpfer werden Federdrahtelemente 20 verwendet, die entsprechend des maximalen aushaltbaren Restschocks der schwächsten Komponente ausgelegt sind. Dadurch ist die Schocksicherheit (z.B. gemäß Vorschriften der deutschen Bundesmarine) realisiert. Aufgrund der elastischen Lagerung der Antriebseinheit 19 sinkt deren Antriebsfundament bei unterschiedlichen Belastungen des Fahrkorbs unterschiedlich tief. Durch dieses Einsinken in die Federdrahtelemente kommt es zu einer Kettenlängung. Dadurch erfolgt eine Positionsänderung der Höhe des Fahrkorbes 2.

Da die Absenkung des Fahrkorbes 2 bei dessen Beladung nicht verhindert werden kann, ist erfindungsgemäß ein Absolutwertgeber 27 für die Fahrwegerfassung eingesetzt, der diese Wegänderung erfasst. Dieser Absolutwertgeber 27 ist nicht direkt auf der elastisch gelagerten Antriebseinheit 19 befestigt, sondern an einem Zahnrad der Kettenumlenkung direkt am Hubmast 1 positioniert. Da der Fahrkorb 2 an dem Hubmast 1 hängt, kann der Absolutwertgeber (Wegmesssystem) 27 an seiner Position jede Bewegung der Kette 51 relativ zu dem Hubmast feststellen. Somit kann eine Positionsänderung und damit auch die exakte Fahrkorbstellung jederzeit erfasst werden. Außerdem kann hierdurch neben der Erfassung der Fahrkorbposition durch unterschiedliche Belastungen auch die Fahrkorbposition bei Durchrutschen einer später beschriebenen Rutschkupplung genau erfasst werden.

An der Antriebskonsole ist eine Motor-Getriebeanordnung mit verlängerter und zusätzlich gelagerter Antriebswelle (Abtriebswelle des Motors) 57 befestigt. Ein Antriebsdoppelkettenrad 21 ist als ein Teil gefertigt und mit zwei geschliffenen und gehärteten Stirnscheiben 22 versehen, die zwischen den zwei Reibbelägen einer Rutschkupplung eingespannt ist, um einen Reibschluss einer integrierten einstellbaren Rutschnabe 23 aufzunehmen. Die Rutschnabe 23 schließt im Schockfall zu hohe Fahrkorblasten aus und ist so eingestellt, dass während eines Normalbetriebs eine doppelte maximal zulässige Belastung des Aufzugs nicht zu einem Durchrutschen führt. Hierdurch wird ein Kettenbruch bei höheren Belastungen im Schockfall verhindert, da dann die Kupplung durchrutschen kann und die Ketten 51, 51 nicht mit mehr als der doppelten Nennlast belastet werden.

Bei Nichtbenutzung des Munitionsaufzuges kann der Fahrkorb 2 außerdem über die Steuerung auf zwei im Sumpf angeordneten elastischen Puffern 18 abgesetzt werden, um die Tragmittel zu entlasten.

Als Tragmittel für den Fahrkorb 2 sind aufgrund der Schockbelastungen zwei Rollenketten 51, 51 vorgesehen und wie voranstehend beschrieben dimensioniert. Die Ketten 51, 51 sind als umlaufende Ketten einmal oberhalb des Fahrkorbrahmens und einmal unterhalb des Fahrkorbrahmens befestigt. Dadurch wird eine Zwangsführung erreicht, die im Schockfall auch eine vertikale Bewegung des Fahrkorbes nach oben abfangen kann.

Die von oben kommenden zwei Tragketten 51, 51 verbinden den Fahrkorb 2 über eine Kettenwippe 11 welche sich z.B. in einem Fall eines Kettenbruchs schräg stellt und daraufhin einen Hebelschalter 12 betätigt, der eine Sicherheitsabschaltung der Steuerung bewirkt. Diese Anordnung ist insbesondere aus Fig. 6 ersichtlich. In Fig. 6 ist ein Querholm 63 des Fahrkorbes 2 dargestellt.

Die beiden von unten kommenden Ketten 51, 51 sind mittels vorgespannten Druckfederelementen 13 am Fahrkorb 2 befestigt. Bei Kettenlose durch das Einsinken der Schockdämfer 20 der Antriebskonsole unter dem Gewicht des Fahrkorbes 2 gleicht das jeweilige Druckfederelement 13 das Spiel (Kettenlose) aus. Bei einem Bruch einer Kette 51 schaltet ein an der jeweiligen Kette 51 angeordneter Hebelendschalter 14 die Steuerung aus und der Fahrkorb 2 wird über die verbleibende Kette 51 und eine Antriebsmotorbremse gehalten.

Zur Montage eines Druckfederelementes 13 wird ein zylindrisches Teil 65 von unten durch den Querholm 63 des Fahrkorbs geführt. Eine Spiralfeder wird als Druckfederelement 13 über das zylindrische Teil 65 geschoben und mittels einer Befestigungsmutter 61 unter Vorspannung gebracht. An einem in Fig. 6 unten angeordneten Ende des zylindrischen Teils 65 ist eine Kettenhalterung 67 angebracht, die eine abgeschrägte Fläche 69 aufweist.

Um eine bestimmte Kettenspannung zu gewährleisten, können die Ketten über die Spannschrauben an den Druckfederelementen 13 nachgespannt werden.

Kommt es z.B. während des Beladens zu einem plötzlichen Absinken des Fahrkorbes 2, was zu einem Lose der Kette 51 führt, dehnt sich das vorgespannte Druckfederelement 13 aus und spannt somit die Kette 51. Darüber hinaus dient diese Struktur in vorteilhafter Weise auch als Dämpfer in einem Schockfall, wenn das Schiff z.B. aufgrund einer Detonation zuerst angehoben wird, um dann rasch abzusinken. In einem derartigen Fall kann es aufgrund der Massenträgheit zu einer plötzlichen Relativbewegung des Fahrkorbes 2 nach oben kommen, wodurch die an der Unterseite des Fahrkorbs angebrachten Ketten 51 einer übermäßig hohen Zugbelastung ausgesetzt sind. Diese Zugbelastung wird durch die Druckfederelemente 13 gedämpft.

Kommt es dennoch zu einem Kettenbruch, gleitet der Schalter 14 entlang der abgeschrägten Fläche 69 der Kettenhalterung 67 zu einer Endposition und sorgt somit für eine Notabschaltung.

Zum Toleranzausgleich der Tragketten 51 ist die Führung der beiden Tragketten 51 über Umlenkeinheiten mit geteilten Doppelkettenrädern 15 oben und unten am Aufzugsmast und im Bereich des Antriebes ausgeführt. Lediglich die Antriebskettenräder 21 auf dem Antriebsfundament sind nicht geteilt sondern als eine starr verbundene Einheit in einstückiger Weise ausgeführt.

Der Fahrkorb 2 ist außerdem mit einer Fangvorrichtung ausgestattet, die den Fahrkorb 2 bei Überschreiten einer normalen bzw. einer voreingestellten maximalen Abwärtsgeschwindigkeit abfängt und an den Führungsschienen festklemmt. Die Fangvorrichtung besteht aus einem umlaufenden Stahlseil 53, welches oben und unten über Seilscheiben 16 17 am Mast umgelenkt ist und an einem Punkt am Auslösegestänge des Fahrkorbs 2 befestigt ist. Außerdem ist das Seil über einen am Antriebsfundament befestigten Geschwindigkeitsregler 34 einer weiteren Seilumlenkung mit drehzahlabhängiger Blockiereinrichtung 35 geführt. Die untere Seilumlenkung 17 am Hubmast 1 ist mit einem definierten Spanngewicht frei hängend geführt ausgerüstet und erzeugt eine vorgegebene Vorspannung des Reglerseiles 53. Die Vorspannung des Reglerseiles 53 über das Spanngewicht soll dafür sorgen, dass das Seil an der Umlenkrolle 34 des Geschwindigkeitsreglers 34 nicht durchrutschen kann und den Blockiermechanismus sicher auslöst. Dabei wird das Reglerseil 53 blockiert und kann so einen Bremshebel 36 an der Fangvorrichtung aktivieren. Über den Bremshebel 36 wird mechanisch eine Keilvorrichtung der Fangbremse 37 aktiviert, die den Fahrkorb an den Führungsschienen 55 festklemmt und stoppt. Im Detail ist die Fangvorrichtung 35 aus Fig. 12 ersichtlich. Diese zeigt das Detail "c" aus Fig. 1.

Die elektrische Versorgung zum Fahrkorb 2 ist mit einem Schleppkabel realisiert, welches unterhalb des Fahrkorbs 2 befestigt und angeschlossen ist und in einer Energiekette im Schacht auf Bb-Seite bis zu einem Klemmenkasten an der Antriebseinheit 19 geführt ist.

In einem Automatikbetrieb der Steuerung werden alle Fahrwege über das Wegmesssystem 27 erfasst und zur Verarbeitung an die Steuerung (SPS, speicherprogrammierbare Steuerung) weitergegeben. Als Absicherung oder Alternative zu dem Wegmesssystems sind zusätzlich induktive Näherungsschalter vorgesehen, die bei einem Ausfall des Wegmesssystems, die Wegerfassung übernehmen und den Betrieb aufrechterhalten.

Dies gilt besonders für einen Gefechts-Notbetrieb, in dem trotz Ausfalls verschiedener Sicherheitseinrichtungen der Betrieb der Aufzugsanlage unbedingt weiter aufrecht erhalten werden muss, um den Munitionstransport zu gewährleisten. Der Gefechts-Notbetrieb kann nur über ein separates Bedientableau aktiviert werden, das mit einem Schloss gesichert ist. Im Gefechtsnotbetrieb kann der Fahrkorb zwischen den Decks mit langsamer Geschwindigkeit im "Schickbetrieb" gefahren werden. Da im Gefechts-Notbetrieb auch mit offenen Schachttüren gefahren werden kann, wird der Schlüssel in der Regel vom Kommandanten verwahrt.

Die Schachttüren in den Stationen sind als zweiteilige horizontale Schiebetüren 28 ausgeführt. Sie lassen sich nur öffnen, wenn der Fahrkorb in die entsprechende Station eingefahren ist. Die Verriegelung der Türen erfolgt über elektrisch betätigte und überwachte Türverriegelungsschalter, die von der SPS angesteuert werden. Für die Fahrwegbegrenzung des Fahrkorbs im Fahrschacht sind beim Überfahren der obersten und untersten Stoppposition, Hebelendschalter zum Abschalten der Anlage vorgesehen.

In jeder Station sind im Bereich der Schiebetüren und des Lukendeckels auf dem B-Deck, auf Schockdämpfern gelagerte Bedientableaus angebracht, um jederzeit einen Eingriff in die Steuerung zu ermöglichen.

Das Anfahren der Station "Freies Deck" (Oberdeck) kann nur über ein auf dem B-Deck angeordnete Bedientableau vorgenommen werden, da der Bediener nur von dort aus Einsicht in den Fahrbereich hat und Gefährdungen erkennen kann. Das Bedientableau auf dem B-Deck muss vor dem Betrieb über einen Schlüsselschalter freigeschaltet werden und der wasserdichte Lukendeckel 33 vollständig geöffnet sein. Der Fahrkorb 2 kann dann im "Totmann-Betrieb" und in langsamer Geschwindigkeit auf das freie Deck gefahren werden, sowie die Türen unter Deck (P- und Z-Deck) geschlossen wurden und eine "Bereit-Lampe" im Tableau leuchtet.

Im Folgenden werden nochmals Details und Vorteile einer aktuell bevorzugten Ausführungsform des erfindungsgemäßen Aufzugs anhand von Figuren 1 bis 12 erläutert.

Der erfindungsgemäße Hubmast 1 (der im Folgenden auch als Mastsystem bezeichnet ist) kann als komplette Einheit vorinstalliert mit Antriebsfundament in den vorhandenen Schacht eingesetzt werden. Dies ermöglicht u.a., den Fahrkorb von drei Seiten zu beladen, und außerdem den Fahrkorb 2, über das obere Führungsschienenende hinaus auf ein freies Deck (freies Oberdeck) herauszufahren. Der Schacht endet am freien Oberdeck und ist mit dem wasserdichten Schachtdeckel 33 mit dem darunter liegenden Sicherheitsdeckel 24 als Absturzsicherung ausgestattet.

Der Hubmast 1 besteht im Wesentlichen aus zwei in Einbaulage senkrecht angeordneten Vierkant- Hohlprofilen, die horizontal auf der gesamten Länge durch zusätzliche Vierkant-Hohlprofile miteinander verschweißt sind und in sich ein stabiles Traggerüst bilden. An den senkrechten anzuordnenden Mastprofilen sind gekantete Winkelprofile verschweißt, an denen die Führungsschienen 55 für den Fahrkorb verschraubt werden.

Der Hubmast 1 ist mit seinem Fuß (Fundamentplatten) 1a, die an den unteren Enden der senkrechten Hohlprofile angeschweißt sind, einmal auf dem Schachtfundament mit schalldämmenden Gummimatten als Zwischenlage verschraubt und zum Anderen an den Querprofilen mit den an der Schachtwand vorgesehenen Fundamentstreifen über Befestigungswinkel und Schrauben befestigt. Der Hubmast 1 ist somit einmal am Boden als auch mehrfach an der gesamten Schachtwand bis zum freien Deck befestigt. Die Profile und die Mastkonstruktion selbst wurden dabei auf Schockbelastungen mit Beschleunigungswerten bis 200 x g ausgelegt, die sowohl vertikal als auch horizontal aufgenommen werden können.

Der Fahrkorb 2 besteht aus einer Rahmenkonstruktion mit Verstrebungen, welche ebenfalls aus verschweißten Hohlprofilen besteht. Der Fahrkorb hält den voranstehend erwähnten Schockbelastungen auch bei einem Absetzen des Fahrkorbes auf Aufsetzpuffern 18 stand, ohne dass dabei Beschädigungen am Fahrkorb 2 oder seiner Ladung auftreten. An der rückseitigen Rahmenkonstruktion sind seitlich U-Profile 59 am Fahrkorb angeschweißt, an denen jeweils drei Laufrolleneinheiten (insgesamt 6 Laufrolleneinheiten) 3a, 3b, 3c befestigt sind, an denen der Fahrkorb 2 an den Führungsschienen 55 geführt und gegen Kippen gehalten ist.

Bei einem Herausfahren des Fahrkorbes 2 auf das freie Deck, verlassen die oberen beiden Rolleneinheiten 3a die Führungsschienen 55 am Mast 1 und der Fahrkorb 2 wird über die unteren vier verbleibenden Rolleneinheiten 3b, 3c an den seitlichen U-Profilen im Bereich des verlängerten Unterbaus geführt und abgestützt. Beim Herausfahren des Fahrkorbes 2 auf das freie Deck wird der Sicherheitsdeckel 24 über eine Auflaufkurve 25 am Fahrkorb 2 und einer Führungsrolle 26 am Sicherheitsdeckel 24 zwangsgeführt geöffnet und beim Absenken wieder geschlossen. Hierdurch wird ein Abstürzen in den Schacht verhindert, wenn sich der Fahrkorb 2 unter Deck befindet. Der Sicherheitsdeckel 26 wird in seiner Stellung "geschlossen" überwacht. Sollte der Sicherheitsdeckel 26 nicht schließen, wird der weitere Fahrweg des Fahrkorbes 2 nach unten blockiert.

Der Fahrkorb wird über zwei Ketten 51 zwangsgeführt angetrieben. Die oberen Kettenanbindungen erfolgen über einen z.B. aus Fig. 6 ersichtlichen Kipphebel 11, der an einem Querholm 63 des verlängerten Unterbaus befestigt und über einen Sicherheitsschalter 12 überwacht ist. Bei einem Riss einer Kette 51 oder Nachlassen einer Kettenspannung stellt sich dieser Kipphebel 11 schräg und betätigt den Sicherheitsschalter 12, wodurch die Steuerung abgeschaltet wird. Der Fahrkorb 2 hängt mit seiner gesamten Masse an der Achse dieses Kipphebels 11 der aus einem hochfesten Werkstoff hergestellt und derart ausgelegt ist, dass er ein Vielfaches des Fahrkorbgewichtsgewichtes tragen kann.

Die Ketten 51 sind dann weiter über die z.B. aus Fig. 2 ersichtliche, obere doppelte Kettenumlenkung 15 nach unten über eine weitere doppelte Kettenumlenkung und das Antriebskettenrad 21 mit Rutschkupplung 23 geführt und von dort aus weiter über eine doppelte Kettenumlenkung nach unten über die untere doppelte Kettenumlenkung 15 am Mastfuß zur unteren Kettenanbindung 67 am Fahrkorb 2, an der die Unterketten befestigt sind.

Die untere Kettenanbindung am Fahrkorb 2 besteht aus zwei Druckfederelementen (Druckfedern) 13 mit zylindrischen Achsen 65, die über Führungsbuchsen durch den Querholm 63 geführt und an denen wiederum die Kettenhalterungen 67 befestigt sind. Über die Befestigungsmuttern 61 können die Druckfedern 13 und somit die Ketten 51 vorgespannt werden. Die Druckfedern 13 sind hierbei so ausgelegt, dass sie noch zusätzliche Spannkraft bzw. -weg zur Verfügung stellen können, um im Schockfall Stoßbelastungen abzudämpfen. Dies ist z.B. aus Fig. 6 ersichtlich.

Die Antriebseinheit 19 mit dem Antriebsmotor, Getriebe und den Antriebskettenrädern (Detail b aus Fig. 2, in Fig. 8 vergrößert gezeigt) ist auf einem gemeinsamen Fundament angeordnet, welches über elastische Federdrahtelemente am Mast befestigt ist. Die Federdrahtelemente sind so ausgelegt und berechnet, dass bei maximaler Schockbelastung von 200 x g vertikal und 150 x g horizontal, eine Restschockbelastung von ca. 10 x g in das Antriebsfundament eingeleitet wird. Hierfür sind wiederum die auf dem Antriebsfundament befindlichen Bauteile ausgelegt. Zusätzlich sind die Antriebskettenräder 21 starr miteinander verbunden und über eine einstellbare Rutschkupplung 22, 23 mit der Antriebsachse 57 verbunden. Diese Rutschkupplung 22, 23 ist so eingestellt, dass sie den Betrieb des Fahrkorbes mit doppelter Last gewährleistet, ohne dass die Kupplung (durch-) rutscht. Für den Fall, dass der Fahrkorb 2 sich im Schockfall nicht auf den Puffern 18 abgesetzt befindet, wirkt die Rutschkupplung 22, 23 bei Überschreitung eines bestimmten Drehmomentes, um die Antriebsketten 51 zu entlasten, die durch die Massenträgheit des Fahrkorbes 2 den Beschleunigungswerten ansonsten nicht standhalten würden, was zu einem Riss der Ketten führen würde.

Durch die Einwirkung der vertikalen Beschleunigungswerte im Schockfall treten mehrere Reaktionen auf. Die Schockbelastung erfolgt in Form einer positiven und negativen Sinus Halbperiode während eines bestimmten Zeitraums. Dabei ist die positive Halbwelle am höchsten und entspricht einem Maximalwert. Bei Einwirkung der positiven Sinushalbperiode wird der Fahrkorb 2 in vertikaler Richtung nach oben beschleunigt. Das heißt, dass aus der Massenträgheit resultierende Kräfte nach unten und somit auf die "Oberketten" wirken. Diese Kräfte werden im Schockfall einerseits von den Federdrahtelementen 20 des Antriebsfundamentes reduziert und aufgenommen, und andererseits durch das "Durchrutschen" der Rutschkupplung soweit reduziert, dass die Ketten entlastet werden und ein Reißen der Ketten mit ausreichender Sicherheit ausgeschlossen werden kann.

Die negative Sinushalbperiode mit geringeren Beschleunigungswerten, beschleunigt den Fahrkorb 2 nach unten, wobei die Kräfte aufgrund der Massenträgheit wiederum nach oben wirken. Das bedeutet, dass hauptsächlich die Unterketten belastet werden. Hier wirkt nun das vorgespannte Federpaket (Federelemente 13) der unteren Kettenanbindung entlastend, wodurch eine Überbeanspruchung der Ketten 51 verhindert ist.

Durch den Einsatz der Rutschkupplung 22, 23 zusammen mit dem Einsatz der Druckfederelemente 13, ist der Munitionsaufzug für einen weiteren Betrieb geschützt, auch wenn die maximal zulässigen (geforderten) Schockbelastungen im Betrieb aufgetreten sind. Das Wegmesssystem 27 ist mit einer fest am Hubmast 1 befestigten Kettenumlenkung verbunden. Daher kann das Wegmesssystem 27 ein Durchrutschen der Kupplung und damit verbunden eine Wegänderung der Kette erfassen. Da die Wegänderung bekannt ist, wird die Genauigkeit der Einfahrhöhe des Fahrkorbes nicht beeinträchtigt, sodass die Kettenlängenänderung bei einem Durchrutschen der Kupplung erfasst werden kann. Daher wird auch die aktuelle Ist-Höhe des Fahrkorbes erfasst. Somit ist eine bündige Einfahrhöhe in den Stationen gewährleistet.

Die Erfindung wurde anhand von einem in den Figs. 1 bis 12 dargestellten derzeit bevorzugtem Ausführungsbeispiel beschrieben. Der Bereich der Erfindung ist lediglich durch die anhängenden Ansprüche definiert.

### Bezugszeichenliste:

- 1: Hubmast
- 2: Fahrkorb
- 2B: Fahrkorbboden
- 3: Führungsrolle (3a, 3b, 3c)
- 4: Ausklappbarer Rollentisch Stb
- 5: Ausklappbarer Rollentisch Bb
- 6: Ausklappbarer Rollentisch vorn
- 7: Stützfüße (Klappfüße)
- 8: Führungsleiste
- 9: Kippsicherung
- 10: Kugelrollen
- 11: Kettenwippe
- 12: Hebelschalter (an der Kettenwippe)
- 13: Druckfederelement
- 14: Hebelschalter (am Druckfederelement)
- 15: Doppelkettenrad
- 16: Seilscheibe oben (Seilumlenkung)
- 17: Seilscheibe unten (Seilumlenkung)
- 18: Absetzpuffer (elastischer Puffer)
- 19: Antriebseinheit
- 20: Schockdämpfer (Federdrahtelemente)
- 21: Antriebskettenrad (Antriebsdoppelkettenrad)
- 22: Stirnscheibe
- 23: Rutschnabe
- 24: Sicherheitsdeckel
- 25: Auflaufkurve(25a, 25b, 25c)
- 26: Führungsrolle
- 27: Absolutwertgeber (Wegmesssystem)
- 28: Schiebetür
- 29: Riegelbolzen
- 30: Palette Standardmunition
- 31: Palette Treibladung
- 32: Palette Vulcano- Contrainer
- 33: Schachtdeckel
- 34: Geschwindigkeitsregler
- 35: Blockiereinrichtung
- 36: Bremshebel
- 37: Fangbremse
- 51: Kette (Rollenkette)
- 53: Reglerseil
- 55: Führungsschiene
- 57: Antriebswelle des Motors
- 59: Rahmenteil
- 61: Befestigungsmutter
- 63: Querholm
- 65: Zylindrischer Teil
- 67: Kettenhalterung

## Patentansprüche

1. Munitionsaufzug für Schiffe, mit
einem Hubmast (1),
einer Antriebseinheit (19),
einem an dem Hubmast (1) beweglich angebrachten und durch die Antriebseinheit (19) angetriebenen Fahrkorb (2) mit einem Fahrkorbboden (2B), und
der Fahrkorb (2) von mehreren Seiten zugänglich ist, damit er von mehr als einer Seite beladen werden kann,
**dadurch gekennzeichnet, dass**
die Antriebseinheit (19) über elastische Elemente (20) an dem Hubmast (1) gelagert ist, und
der Fahrkorb (2) an mindestens einer über die Antriebseinheit (19) geführten, umlaufenden Kette (51, 51) aufgehängt ist, wobei der Fahrkorb (2) bevorzugt oberhalb und unterhalb des Fahrkorbbodens (2B) an der Kette (51) befestigt ist.

2. Munitionsaufzug nach Anspruch 1, wobei
der Fahrkorb (2) an mehreren Seiten mit Rollentischen (4, 5, 6) versehen ist, die bevorzugt ausklappbar ausgebildet und/oder mit Stützfüßen (7) versehen sind, wobei mindestens einer der Rollentische (4, 5, 6) mit Führungsleisten (8) und/oder Kippsicherungen (9) für einen Transportbehälter versehen ist.

3. Munitionsaufzug nach Anspruch 1, wobei die Anzahl der Ketten (51, 51) zwei beträgt, und die Ketten (51, 51) oberhalb des Fahrkorbs (2) über eine Kettenwippe (11) mit dem Fahrkorb (2) verbunden sind, die sich bei Bruch einer Kette (51, 51) schräg stellt, um einen Schalter (12) zu betätigen.

4. Munitionsaufzug nach einem der Ansprüche 1 oder 2, wobei die mindestens eine Kette (51, 51) unterhalb des Fahrkorbbodens (2B) über ein vorgespanntes elastisches Element (13) mit dem Fahrkorb (2) verbunden ist.

5. Munitionsaufzug nach einem der vorangehenden Ansprüche, wobei der Boden (2B) des Fahrkorbs (2) mit Kugelrollen (10) und/oder einem aus dem Boden (2B) ausfahrbaren und in dem Boden (2B) versenkbaren Arretierstift (29) versehen ist.

6. Munitionsaufzug nach einem der vorangehenden Ansprüche, wobei der Fahrkorb (2) über eine Mehrzahl in mindestens einer an dem Hubmast vorgesehenen Führungsschiene (55) laufenden, voneinander beabstandeten Führungsrolleneinheiten (3, 3, 3) geführt ist, wobei der Fahrkorb (2) an einem oberen Ende des Hubmasts (1) so weit ausfahrbar ist, dass eine der Führungsrolleneinheiten (3) außerhalb und oberhalb der Führungsschiene (55) liegt, um bei einem Absenken des Fahrkorbs (2) von der Führungsschiene (55) aufgenommen zu werden.

7. Munitionsaufzug nach einem der vorangehenden Ansprüche, wobei die Antriebseinheit (19) einen Motor und ein von dem Motor angetriebenes Antriebsrad (21) aufweist, über das die mindestens eine Kette (51, 51) geführt ist, wobei das Antriebsrad (21) bevorzugt über eine Rutschnabe (23) einer Rutschkupplung auf einer Abtriebsachse des Motors gelagert ist.

8. Munitionsaufzug nach Anspruch 7, wobei das Antriebsrad (21) als Antriebsdoppelkettenrad ausgebildet ist, das als ein Teil gefertigt und mit Stirnscheiben (22) versehen ist, die zwischen Reibbelägen der Rutschkupplung eingespannt sind.

9. Munitionsaufzug nach einem der vorangehenden Ansprüche, wobei ein Wegaufnehmer (27) direkt an dem Hubmast (1) angebracht ist, der eine Positionsänderung der Kette (51, 51) relativ zu dem Hubmast erfasst.

10. Munitionsaufzug nach einem der vorangehenden Ansprüche, wobei an einer tiefsten Position des Hubmastes ein oder mehrere Puffer (18) vorgesehen sind, gegen die der Fahrkorb (2) in Anlage geraten kann, wobei die Puffer (18) bevorzugt elastisch ausgeführt sind.

11. Munitionsaufzug nach einem der vorangehenden Ansprüche, wobei an einem dem Boden (2B) entgegengesetzten Ende des Fahrkorbes (2) Auflaufkurven (25a, 25b, 25c) ausgebildet sind, die eine Aufnahme und Zwangsführung für eine Führungsrolle (26) eines Schachtdeckels (24) aufweisen, wobei bevorzugt mindestens eine (25b, 25c) der Auflaufkurven mittels eines U-förmigen Profils ausgebildet ist, dessen offene Seite zu der Mitte des Fahrkorbes (2) gerichtet ist.

## Claims

1. Ammunition lift for ships, comprising
a lifting mast (1),
a drive unit (19),
a lift car (2) which is movably mounted on the lifting mast (1), is driven by the drive unit (19) and has a lift car floor (2B), and
the lift car (2) is accessible from a plurality of sides such that it can be loaded from more than one side,
**characterized in that**
the drive unit (19) is mounted on the lifting mast (1) via elastic elements (20), and
the lift car (2) is suspended on at least one revolving chain (51, 51) which is guided via the drive unit (19), wherein the lift car (2) is preferably fastened to the chain (51) above and below the lift car floor (2B).

2. Ammunition lift according to Claim 1, wherein the lift car (2) is provided on a plurality of sides with roller tables (4, 5, 6) which are preferably designed such that they can be folded out and/or are provided with support feet (7), wherein at least one of the roller tables (4, 5, 6) is provided with guide strips (8) and/or anti-tilt safeguards (9) for a transport container.

3. Ammunition lift according to Claim 1, wherein the number of chains (51, 51) is two, and the chains (51, 51) are connected to the lift car (2) above the lift car (2) via a chain rocker (11) which slants in the event of breakage of a chain (51, 51) in order to actuate a switch (12).

4. Ammunition lift according to either of Claims 1 and 2, wherein the at least one chain (51, 51) is connected to the lift car (2) below the lift car floor (2B) via a prestressed elastic element (13).

5. Ammunition lift according to one of the preceding claims, wherein the floor (2B) of the lift car (2) is provided with ball rollers (10) and/or with an arresting pin (29) which can be moved out of the floor (2B) and can be sunk in the floor (2B).

6. Ammunition lift according to one of the preceding claims, wherein the lift car (2) is guided via a plurality of spaced-apart guide roller units (3, 3, 3) which run in at least one guide rail (55) provided on the lifting mast, wherein the lift car (2) can be moved out at an upper end of the lifting mast (1) to such an extent that one of the guide roller units (3) is situated outside of and above the guide rail (55) in order to be received by the guide rail (55) during a lowering of the lift car (2).

7. Ammunition lift according to one of the preceding claims, wherein the drive unit (19) has a motor and a drive wheel (21) which is driven by the motor and via which the at least one chain (51, 51) is guided, wherein the drive wheel (21) is preferably mounted on an output shaft of the motor via a slip hub (23) of a slip clutch.

8. Ammunition lift according to Claim 7, wherein the drive wheel (21) is designed as a double-chain drive wheel which is produced as one part and is provided with end discs (22) which are clamped between friction linings of the slip clutch.

9. Ammunition lift according to one of the preceding claims, wherein a displacement transducer (27) is mounted directly on the lifting mast (1) and detects a change in position of the chain (51, 51) relative to the lifting mast.

10. Ammunition lift according to one of the preceding claims, wherein one or more buffers (18) against which the lift car (2) can come into contact are provided at a lowermost position of the lifting mast, wherein the buffers (18) are preferably designed to be elastic.

11. Ammunition lift according to one of the preceding claims, wherein run-on curves (25a, 25b, 25c) which have a receptacle and positive guide for a guide roller (26) of a shaft cover (24) are formed on an opposite end of the lift car (2) to the floor (2B), wherein preferably at least one (25b, 25c) of the run-on curves is formed by means of a U-shaped profile whose open side is directed towards the centre of the lift car (2).

## Revendications

1. Ascenseur à munitions pour navires, comprenant un mât de levage (1),
une unité d'entraînement (19),
une cabine d'ascenseur (2) munie d'un fond de cabine d'ascenseur (2B) montée mobile sur le mât de levage (1) et entraînée par l'unité d'entraînement (19), et
la cabine d'ascenseur (2) est accessible depuis plusieurs côtés afin qu'elle puisse être chargée depuis plus d'un côté,
**caractérisé en ce que**
l'unité d'entraînement (19) est supportée sur le mât de levage (1) par le biais d'éléments élastiques (20) et la cabine d'ascenseur (2) est accrochée à au moins une chaîne (51, 51) circulaire guidée par le biais de l'unité d'entraînement (19), la cabine d'ascenseur (2) étant de préférence fixée à la chaîne (51) au-dessus et au-dessous du fond de cabine d'ascenseur (2B).

2. Ascenseur à munitions selon la revendication 1, la cabine d'ascenseur (2) étant pourvue de tables à rouleaux (4, 5, 6) sur plusieurs côtés, lesquelles sont de préférence réalisées dépliables et/ou munies de béquilles (7), au moins l'une des tables à rouleaux (4, 5, 6) étant pourvue de glissières de guidage (8) et/ou de dispositifs de sécurité anti-basculement (9) pour un récipient de transport.

3. Ascenseur à munitions selon la revendication 1, le nombre de chaînes (51, 51) étant de deux et les chaînes (51, 51) étant reliées à la cabine d'ascenseur (2) au-dessus de la cabine d'ascenseur (2) par le biais d'un baladeur à chaîne (11) qui, en cas de rupture d'une chaîne (51, 51), se met en biais pour actionner un commutateur (12).

4. Ascenseur à munitions selon l'une des revendications 1 ou 2, l'au moins une chaîne (51, 51) étant reliée à la cabine d'ascenseur (2) sous le fond de cabine d'ascenseur (2B) par le biais d'un élément élastique (13) précontraint.

5. Ascenseur à munitions selon l'une des revendications précédentes, le fond (2B) de la cabine d'ascenseur (2) étant pourvu de roulettes (10) et/ou d'une broche d'arrêt (29) extractible hors du fond (2B) et escamotable dans le fond (2B).

6. Ascenseur à munitions selon l'une des revendications précédentes, la cabine d'ascenseur (2) étant guidée par une pluralité d'unités à galets de guidage (3, 3, 3) espacées les unes des autres et défilant dans au moins une glissière de guidage (55) présente sur le mât de levage, la cabine d'ascenseur (2) pouvant être sortie au niveau d'une extrémité supérieure du mât de levage (1) jusqu'à un point où l'une des unités à galets de guidage (3, 3, 3) se trouve en-dehors et au-dessus de la glissière de guidage (55) de manière à être accueillie par la glissière de guidage (55) lors d'une descente de la cabine d'ascenseur (2).

7. Ascenseur à munitions selon l'une des revendications précédentes, l'unité d'entraînement (19) possédant un moteur et une roue d'entraînement (21) entraînée par le moteur, par le biais de laquelle est guidée l'au moins une chaîne (51, 51), la roue d'entraînement (21) étant de préférence montée sur un axe d'entraînement du moteur par le biais d'un moyeu à friction (23) d'un accouplement à friction.

8. Ascenseur à munitions selon la revendication précédente 7, la roue d'entraînement (21) étant réalisée sous la forme d'une double roue à chaîne d'entraînement qui est fabriquée d'une seule pièce et qui est pourvue de plaques frontales (22) qui sont serrées entre les garnitures de friction de l'accouplement à friction.

9. Ascenseur à munitions selon l'une des revendications précédentes, un capteur de déplacement (27) étant monté directement sur le mât de levage (1), lequel détecter un changement de position de la chaîne (51, 51) par rapport au mât de levage.

10. Ascenseur à munitions selon l'une des revendications précédentes, un ou plusieurs tampons (18) contre lesquels la cabine d'ascenseur (2) peut venir en appui se trouvant au niveau d'une position la plus en profondeur du mât de levage, les tampons (18) étant de préférence réalisés élastiques.

11. Ascenseur à munitions selon l'une des revendications précédentes, des courbes d'entrée (25a, 25b, 25c) étant formées sur une extrémité de la cabine d'ascenseur (2) à l'opposé du fond (2B), lesquelles possèdent un logement et un guidage forcé pour un galet de guidage (26) d'un couvercle de cage d'ascenseur (24), au moins l'une des courbes d'entrée (25b, 25c) étant de préférence configurée avec un profilé en U dont le côté ouvert est orienté vers le centre de la cabine d'ascenseur (2).
